# EUROPEAN PATENT SPECIFICATION

(11) **EP 2 355 468 B1**
(45) Date of publication and mention of the grant of the patent: **14.03.2012**
(21) Application number: 10152079.9
(22) Date of filing: 29.01.2010
(51) Int. Cl.: H04M 1/65

(54) **Method and apparatus for providing IVR system requested data**
Verfahren und Vorrichtung zur Bereitstellung von Daten, die von einem IVR-System angefordert werden
Procédé et appareil pour la fourniture de données requises pour un système IVR

(43) Date of publication of application: 10.08.2011
(73) Proprietor: RESEARCH IN MOTION LIMITED, Waterloo, Ontario N2L 3W8 (CA)
(72) Inventor: Skinner, Cory Robert, Waterloo Ontario N2K 0A2 (CA)
(74) Representative: Patel, Binesh

(56) References cited:
- GB-A- 2 389 480
- "Apparatus in Phone Set To Enable Automatic Interaction with IVR System" IP.COM JOURNAL, IP.COM INC., WEST HENRIETTA, NY, US, 6 August 2009 (2009-08-06), XP013133115 ISSN: 1533-0001
- TSAI ET AL: "VoiceXML dialog system of the multimodal IP-Telephony-The application for voice ordering service" EXPERT SYSTEMS WITH APPLICATIONS, OXFORD, GB, vol. 31, no. 4, 1 November 2006 (2006-11-01), pages 684-696, XP024962662 ISSN: 0957-4174 [retrieved on 2006-11-01]
- ROUILLARD: "Web services and speech-based applications" 2006 ACS/IEEE INTERNATIONAL CONFERENCE ON PERVASIVE SERVICES JUNE 26-29, 2006, PISCATAWAY, NJ, USA,IEEE, 1 January 2006 (2006-01-01), pages 341-344, XP031099955 ISBN: 978-1-4244-0237-3

## Description

### TECHNICAL FIELD

The present application relates to a method, device, and computer program product for providing a response to a request in an interactive voice response (IVR) system and, in particular, to a method, device, and computer program product for securely storing response data and enabling transmission of response data during an IVR session.

### BACKGROUND

Interactive voice response (IVR) systems employ computer-telephony technology to automate many voice call system functions. IVR systems may be used to provide menu options and route calls in an organization, solicit data from a user at the beginning of a call, provide data in response to user inquiries and automate many complex functions, such as providing telephone banking services. An IVR session may be used at the beginning of a voice call to retrieve specific information from a person, such as an account number and request type, before routing the call to a live voice session with another person.

In order to interact with an IVR system to obtain data or services, a user typically is requested to select a numbered menu option or to provide information, such as an account number, credit card number, bank card number, or system access sequence. The user responds to IVR requests and inputs data typically by pressing keypad, touchscreen or keyboard buttons on a user device such as a mobile phone to generate dual-tone multi-frequency (DTMF) commands which are understood by the IVR system. If the IVR system employs speech recognition technology, the user may provide a spoken response.

Problems are encountered with entering data to respond to IVR requests since a user must either remember long strings of digits, such as credit card numbers, or access a written source containing the data in order to respond to the IVR system. Data may be stored in the device for the user's reference, such as in a calendar or contact information entry. However, such data may be accessible by others or inadvertently disclosed when sharing contact information between user devices.
[0004a] IP.COM Journal publication No. IPCOM000186030D entitled "Apparatus in Phone Set to Enable Automatic Interaction with IVR System" and published August 6, 2009 is directed to automating an IVR session for a user. It describes an apparatus for recording an IVR session in order to be able to detect a pattern of inputs and provide DTMF signals during the next session with the same phone number. A pre-processing module analyzes the IVR session and marks the interaction sequence. An automation module detects stops in the interaction process for user input and provides keypad signals in DTMF format in response to the detected stops.
[0004b] Great Britain patent No. 2 389 480 entitled "Telephone communication with silent response feature" and published April 20, 2005, is directed to facilitating a conversation between two parties where one of the parties is in an environment which prevents a spoken or audible response. It provides a method of recognizing speech and parsing input from a calling or remote party in order to present a list of text options on a device display to the called party. The called party is able to respond silently to the call by selecting one or more of the displayed response options which may include pre-stored phrases. An IVR unit may be used to cause the remote party to provide input as a structured list of options.

### BRIEF SUMMARY

According to one example embodiment there is provided a method, as recited in claim 1, of providing response data in interactive voice response (IVR) system sessions by electronic devices.

According to another example embodiment is an electronic device, as recited in claim 10, for providing response data in interactive voice response (IVR) system sessions.

According to another example embodiment of the present disclosure, there is provided a computer-readable storage medium in an electronic device having a voice communications interface for connecting to interactive voice response (IVR) systems, as recited in claim 13.

### BRIEF DESCRIPTION OF THE DRAWINGS

FIG. 1 is a graphical representation of a front view of an example of a mobile communications device;

FIG. 2 is a block diagram illustrating a mobile communication device in accordance with one embodiment of the present disclosure; and

FIG. 3 illustrates a flowchart of a method described in the present application.

Like reference numerals are used in the drawings to denote like elements and features.

### DETAILED DESCRIPTION OF EXAMPLE EMBODIMENTS

The present disclosure provides a method and device for storing and transmitting response data in an interactive voice response (IVR) system session. The method and device of the present disclosure store response data in memory in the device. During an IVR session, the response data may be selected, retrieved and transmitted or played to respond to an IVR request. Response data may include a series of characters and symbols such as a credit card number, system access code or service agreement number.

Example embodiments described below refer to a mobile communications device such as a cellular telephone or smartphone. It will be appreciated that the present invention is not limited to mobile devices and in some embodiments may comprise a wired telephone device, or a personal computer or notebook which supports voice communications.

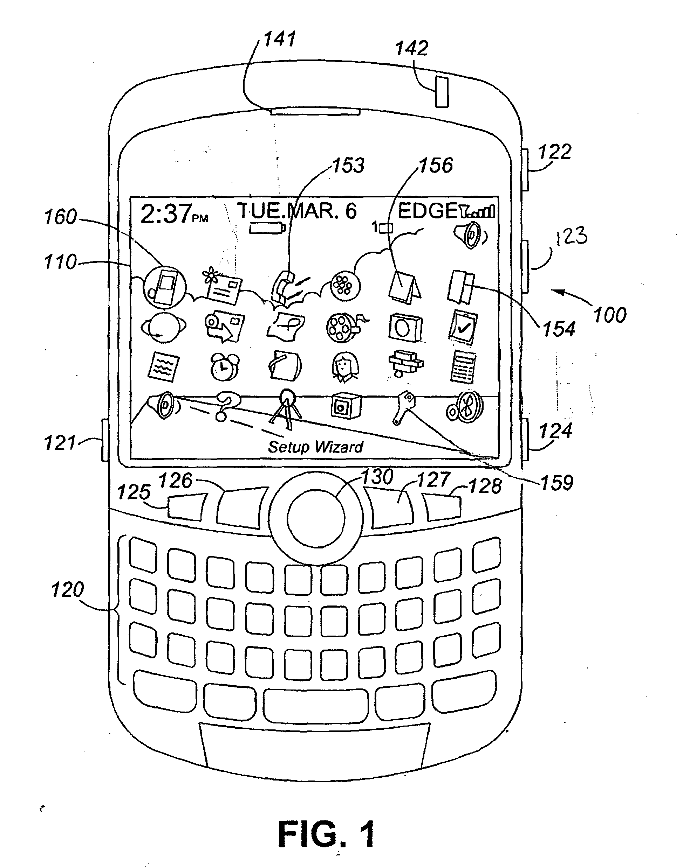

FIG. 1 illustrates a graphical representation of a front view of an example of a mobile communications device 100 to which example embodiments described herein can be applied. The communication device 100 is a two-way communication device having at least voice and possibly also data communication capabilities, and the capability to communicate with other computer systems, for example, via the Internet. Depending on the functionality provided by the communication device 100, in various embodiments the device may be a multiple-mode communication device configured for both data and voice communication, a smartphone, a mobile telephone or a PDA (personal digital assistant) enabled for voice communication.

The mobile communications device 100 includes a display screen 110, an alphanumeric keyboard or keypad 120; optionally one or more non-keyboard inputs, such as buttons 121-128 which may be navigational, function, exit or escape keys which may be inwardly depressed to provide further input function; or a rotatable input device such as a trackball 130 or scrollwheel or trackwheel (not shown). In some embodiments, the keys in the keyboard 120 may not be actual physical keys but may be virtual keys displayed on a touch-sensitive area (not shown) within the display screen 110. The keys in the keyboard 120 may contain one or more letters, numbers or typographic symbols such as a "#" or pound sign.

The mobile communications device 100 includes a speaker 141, a visible indicator 142 and a plurality of user selectable icons shown on the display screen 110. The icons are each associated with functions that can be performed by the mobile device 100. For example, FIG. 1 shows a "Phone" icon 153 for accessing telephone functionality (associated with voice communications module 225), an "Address Book" icon 154 for accessing address book functions (associated with address book module), a "Calendar" icon 156 for accessing calendar functions (associated with a calendar module) and an options icon 159 (associated with an options module, which may be a separate module or executed by one or more existing modules). An icon is shown highlighted or focused by a caret or selection symbol 160 which can be navigated by a device user among the displayed icons through manipulation of the trackball 130 (or other navigational input device). The trackball 130 is also depressible, such that depression of the trackball 130 when an icon is highlighted or focused by selection symbol 160 results in the launch of functions of the associated module.

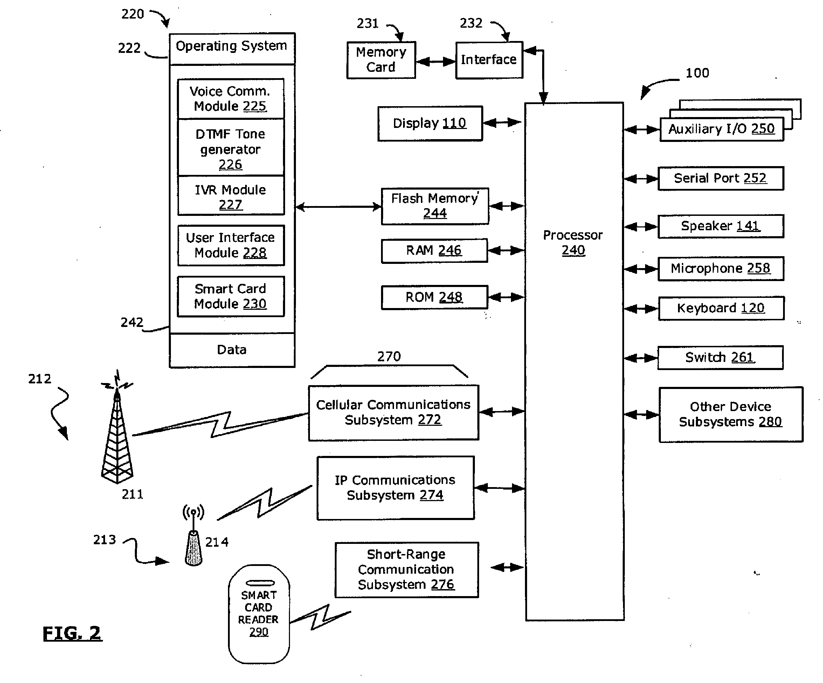

Referring to FIG. 2, the mobile communication device 100 includes a controller comprising at least one processor 240 such as a microprocessor which controls the overall operation of the mobile communication device 100. The microprocessor 240 interacts with communications subsystems shown generally at 270 and with further device subsystems such as: display 110; one or more auxiliary input/output (I/O) subsystems or devices 250; a serial port 252 such as a Universal Serial Bus (USB) data port; a speaker 141; a microphone 258; keyboard or keypad 120; a switch 261; a removable memory card 231 and interface 232; flash memory 244; random access memory (RAM) 246; read only memory (ROM) 248; and other device subsystems generally designated as 280. Some of the subsystems shown in FIG. 2 perform communication-related functions, whereas other subsystems may provide "resident" or on-device functions.

The particular design of the communications subsystems 270 depends on the network(s) in which the mobile communications device 100 is intended to operate. For example, the communication subsystem 270 of the mobile communication device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), High Speed Packet Access (HSPA), etc. Other types of data and voice networks, both separate and integrated, may also be utilized with the mobile communication device 100.

The mobile communications device 100 may include a cellular communications subsystem 272 including a receiver, a transmitter, and associated components such as one or more antenna elements, and a processing module such as a digital signal processor (DSP) for exchanging signals with a wireless network 212. The mobile communication device 100 may send and receive communication signals over the wireless network 212 after the required network registration or activation procedures have been completed. The wireless network 212 may comprise a public land mobile network (PLMN). The mobile communications device 100 may be capable of both wireless voice and data communications via the wireless network 212.

The mobile communications device 100 may include an internet protocol (IP) communications subsystem 274 for communication with an IP network 213 through a wireless access point 214. The wireless access point 214 may be configured in accordance with one of the IEEE 802.11 specifications. The mobile communications device 100 may be equipped with a suitable antenna, RF transceiver, and software for accessing and using the WLAN connectivity of the wireless access point 214. The mobile communications device 100 may be equipped to support Voice-over-IP (VoIP) communications over the IP network 213.

The short-range communication subsystem 276 provides for communication between the mobile communication device 100 and different systems or devices, which need not necessarily be similar devices. For example, the subsystem 276 may include an infrared device and associated circuits and components, or a wireless bus protocol compliant communication mechanism such as a Bluetooth® communication module to provide for communication with similarly-enabled systems and devices, such as a smart card reader 290.

The processor 240 operates under stored program control and executes software modules 220 stored in memory such as persistent memory, for example, in the flash memory 244. The software modules 220 comprise operating system software 222 and may include a range of application modules, including, a voice communication module 225, a user interface module 228 and a smart card module 230. The software modules may include an address book module, a calendar module, a messaging module, a web browser module, an email module, a notepad module, a push content viewing module, a map module and a media player module, (not shown). The software modules 220 may among other things, each be implemented through stand-alone software modules, or combined together in one or more of the operating system 222 or one or more of the other software modules 220. In some embodiments, the functions performed by each of the above identified modules may be realized as a plurality of independent elements, rather than a single integrated element, and any one or more of these elements may be implemented as parts of other software modules.

The voice communications module 225 may include a DTMF tone generator 226 for generating tones. The DTMF tone generator 226 interprets inputs on the device 100 and generates corresponding DTMF tones during telephone calls. The DTMF tone generator 226 also may generate DTMF tones in response to commands from other modules such as the voice communications module 225 and IVR module 227. Although depicted in Figure 2 as a software module within the voice communications module 225, it will be appreciated that the DTMF tone generator 226 may be implemented wholly or partly through hardware in the cellular communication subsystem 272 or IP communications subsystem 274. For example, existing DTMF tone generation and detection capability within the communication subsystems 272, 274 may be leveraged by the voice communications module 225 to realize, at least in part, the functions of tone generation. The voice communications module 225 may include an IVR module 227 for functions associated with an IVR session, such as detecting an IVR session during a voice connection, storing and transmitting IVR response data, and detecting the termination of the IVR session.

The user interface (UI) module 228 renders and displays a graphical user interface (GUI) on a display 110 of the device 100 in accordance with instructions of the operating system 222 and modules 220 (as applicable). The GUI allows interaction with and control over the operation of the device 100. The GUI may be displayed on the display 110 which may be a touchscreen display. The GUI is rendered prior to display by the operating system 222 or a software module 220 which causes the processor 240 to display content on the display 110.

The software modules 220 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely an example, and those skilled in the art will appreciate that a different assignment of functions to types of memory could also be used.

In some embodiments, the auxiliary input/output (I/O) subsystems 250 may comprise an external communication link or interface, for example, an Ethernet connection. The mobile communication device 100 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 250 may comprise a vibrator for providing vibratory notifications in response to various events on the mobile communication device 100 such as receipt of an electronic communication or incoming phone call, or for other purposes such as haptic feedback (touch feedback).

In some embodiments, the mobile communication device 100 also includes a removable memory card 231 (typically comprising flash memory) and a memory card interface 232. Network access typically is associated with a subscriber or user of the mobile communication device 100 via the memory card 231, which may be a Subscriber Identity Module (SIM) card for use in a GSM network or other type of memory card for use in the relevant wireless network type. The memory card 231 is inserted in or connected to the memory card interface 232 of the mobile communication device 100 in order to operate in conjunction with the wireless network 212.

The mobile communication device 100 stores data in an erasable persistent memory, which in one example embodiment is the flash memory 244. In various embodiments, the data includes service data comprising information used by the mobile communication device 100 to establish and maintain communication with the wireless network 212. The data may also include user application data such as IVR response data, email messages, address book and contact information, calendar and schedule information, notepad documents, image files, and other commonly stored user information stored on the mobile communication device 100 by its user, and other data. The data stored in the persistent memory (e.g. flash memory 244) of the mobile communication device 100 may be organized, at least partially, into a number of databases each containing data items of the same data type or associated with the same application. For example, IVR response data, email messages, contact records, and task items may be stored in individual databases within the device memory. Content protection measures may be applied to one or more data items or databases within the device memory.

The serial data port 252 may be used for synchronization with a user's host computer system (not shown). The serial data port 252 enables a user to set preferences through an external device or software module and extends the capabilities of the mobile communication device 100 by providing for information or software downloads to the mobile communication device 100 other than through the wireless network 212. The alternate download path may, for example, be used to load an encryption key onto the mobile communication device 100 through a direct, reliable and trusted connection to thereby provide secure device communication.

A predetermined set of applications that control basic device operations, including data and voice communication applications will normally be installed on the mobile communication device 100 during or after manufacture. Additional applications and/or upgrades to the operating system 222 or software modules 220 may also be loaded onto the mobile communication device 100 through the wireless network 212, the auxiliary I/O subsystem 250, the serial port 252, the short-range communication subsystem 276, or other suitable subsystems or other wireless communication interfaces. The downloaded programs or code modules may be permanently installed, for example, written into the program memory (i.e. the flash memory 244), or written into and executed from the RAM 246 for execution by the processor 240 at runtime. Such flexibility in application installation increases the functionality of the mobile communication device 100 and may provide enhanced on-device functions, communication-related functions, or both. Secure communication applications may enable electronic commerce functions and other such financial transactions to be performed using the mobile communication device 100.

The mobile communication device 100 may include a personal information manager (PIM) module (not shown) having the ability to organize and manage data items relating to a user such as, but not limited to, instant messaging, email, calendar events, voice mails, appointments, task items and IVR response data. The PIM module has the ability to send and receive data items via the wireless network 212. In some example embodiments, PIM data items are seamlessly combined, synchronized, and updated via the wireless network 212, with the user's corresponding data items stored and/or associated with the user's host computer system, thereby creating a mirrored host computer with respect to these data items.

The mobile communication device 100 may provide two principal modes of communication: a data communication mode and a voice communication mode. In the data communication mode, a received data signal such as a text message, an email message, or web page download will be processed by the communication subsystem 272, 274 and input to the processor 240 for further processing and output on the display 110 or alternatively to an auxiliary I/O device 250. A user of the mobile communication device 100 also may compose data items, such as email messages, for example, using the keyboard 120 in conjunction with the display 110 and possibly the control buttons 121-128 or the auxiliary I/O subsystems 250. These composed items may be transmitted through the communication subsystems 272 and 274 over the respective wireless networks 212 and 213.

In the voice communication mode, the mobile communication device 100 provides telephony functions and operates as a typical cellular phone or as an VoIP phone. Received signals are output to the speaker 141 and signals for transmission would be generated by a transducer such as the microphone 258. The telephony functions are provided by a combination of software/firmware (i.e., the voice communication module 225) and hardware (i.e., the microphone 258, the speaker 141 and input devices). Alternative voice or audio I/O subsystems, such as a voice message recording subsystem, also may be implemented on the mobile communication device 100. Although voice or audio signal output is typically accomplished primarily through the speaker 141, the display 110 may also be used to provide an indication of the identity of a calling party, duration of a voice call, or other voice call related information. A list of stored IVR response data may be provided on the display 110 during a voice call and IVR session for use in responding to an IVR request as described below.

A voice call initiated by the mobile communications device 100 to a telephone number or VoIP address may be answered or terminated by an IVR system. The IVR system may act as an automated attendant, provide information and menu options, solicit information or complete service requests. If the voice call is answered by an IVR system, an IVR session may be established. Alternatively, the IVR system may initiate a voice call to the mobile communications device 100 and establish the IVR session. The IVR session may be established across a telephone network, such as the Public Switched Telephone Network (PSTN) or a VOIP network across a private or public IP network.

The IVR system may be programmed to support a wide range of services such as routing calls, verifying account balances, reviewing recent credit card purchases, checking movie or flight schedules, requesting prescription refills at a pharmacy and confirming or scheduling appointments. The IVR system may be programmed to request data from the mobile communications device 100, such as an account number, technical support code, or other sensitive personal or financial information in order to identify a user and provide the requested service. The IVR system may be programmed to request data from the mobile communications device 100 prior to terminating the IVR session and routing the call to an appropriate resource, such as a live operator or support personnel.

During the IVR session, the IVR system provides prompts or requests for information to the mobile communications device 100 and expects to receive responses to the requests. The IVR system may, on receiving a response to a first request, initiate a subsequent request for additional data from the mobile communications device 100. For example, after requesting an account number and receiving data representing the account number, the IVR system may issue a second request for a password associated with the account. Typically, a delay exists between the time the IVR system is ready to receive a first response such as an account number and the time the IVR system is ready to receive a second or subsequent response such as a password. The IVR system requests for information may be transmitted as pre-recorded or computer generated speech providing instructions or a list of numbered menu options for the IVR system.

Response data which is provided to fulfill an IVR request comprises data representing a menu option or other parameter which is defined in the IVR system or which identifies a user, such as an account number, a password or personal identification number (PIN), or an account number together with a PIN. The response data may be provided to reply to one or more requests from the IVR system. Response data that is used to reply to an IVR request may be unique to the IVR system, such as a system access code, or the response data may be commonly requested by a number IVR systems, such as a credit card number.

The response data may comprise one or more characters including letters, numbers, alphanumeric characters, typographic symbols, pause periods, wait periods, or a combination thereof which may be transmitted by the device 100 to respond to an IVR request or multiple IVR requests. For example, numbers may represent a user account number and symbols such as a "#" or pound sign may indicate the end of the response data.

The response data may be transmitted to the IVR system in a number of different formats and through a number of known communications channels depending on the IVR system, the communications network 212, 213 and the mobile communications device 100. The format for transmitting response data may be determined by the mobile communications device 100 and IVR system, by a user storing response data in a predetermined format, or by a user setting a transmission format identifier for the stored response data.

Response data transmission formats may include DTMF tones, digital data, or audio data, such as spoken words or recorded speech. The IVR system may include speech-recognition capabilities to allow the IVR system to support response data in the format of audio data. In some embodiments, the mobile communication device 100 may include speech-recognition capabilities. In this embodiment, the mobile communications device 100 may accept response data from a user in the form of speech which the mobile communications device 100 converts and sends to the IVR system in a DTMF tone or digital format.

The response data may be stored in the mobile communications device 100 as stored response data in a number of different formats as described above. The response data may be transmitted to the IVR system in the same format as the stored response data or in alternative transmission format supported by the IVR system, the communications network 212, 213 and the mobile communications device 100.

Responses to IVR requests during an IVR session may be provided on the mobile communications device 100 by a user depressing or selecting keys on the keyboard 120 or by a user inputting a spoken response through the microphone 258. As a result of keys being depressed on the keyboard 120, DTMF tones may be generated by the DTMF tone generator module 226 in the voice communications module 225 and transmitted over the communications subsystem 272, 274 to the IVR system. Alternatively, as a result of keys being depressed on the keyboard 120, digital data representing the depressed keys may be transmitted over the communications subsystem 272, 274 to the IVR system.

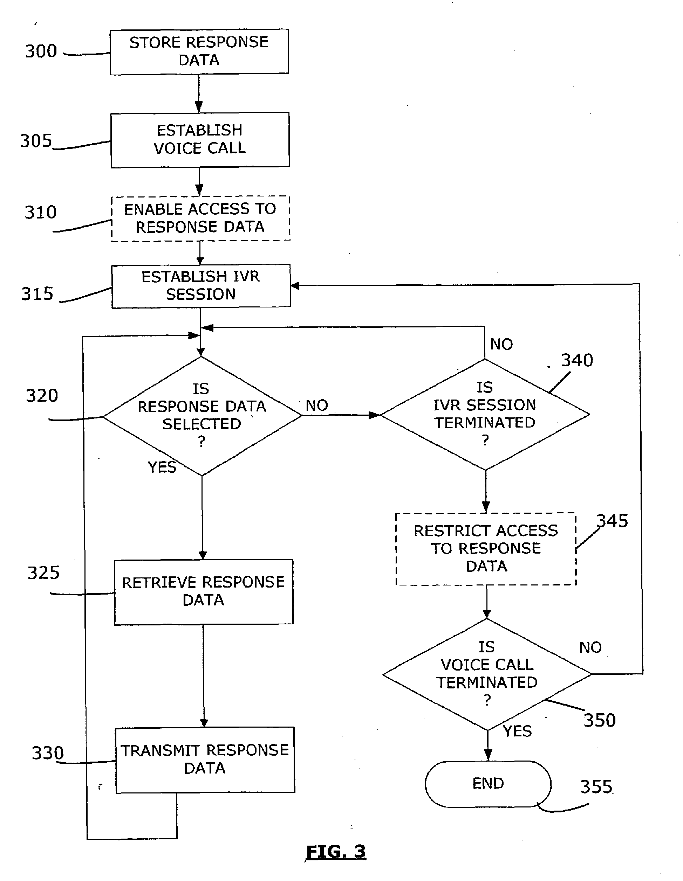

FIG. 3 illustrates an example embodiment of a method of providing response data to an IVR request in the mobile communications device 100. Initially, at action 300, response data is stored in persistent memory, such as flash memory 244 in the mobile communications device 100. Response data typically is stored in the mobile communications device 100 in a digital data format such as digital information representing the response data; commands to generate the response data in the form of DTMF tones; or digital audio data. Alternatively, response data may be stored in an analog audio data format.

The response data may be stored at 300 in the mobile communications device by a number of ways. During an established IVR session, receipt of a predetermined input by the mobile communications device 100 may prompt the mobile communications device 100 to record and store response data being transmitted to the IVR system during the IVR session or during a portion of the IVR session. A second predetermined input may terminate the recordal of response data by the mobile communications device 100. In some embodiments, where the IVR system or the mobile communications device 100 support speech recognition as described above, the response data may be stored by a user speaking the response data and the analog audio data being received by the microphone 258 of the mobile communications device 100.

IVR response data also may be received and stored in the mobile communications device 100 through a GUI provided by the IVR module 227 and user interface module 228. Response data may be received and stored by the mobile communications device 100 as a result of a user depressing keys on the keyboard 120 to indicate the letters, numbers, alphanumeric characters, typographic symbols, pause periods and wait periods comprising the response data. Alternatively, a user may "copy" and "paste" data from other sources in the mobile communications device 100 such as from an email message containing an account or confirmation number which a user may store as response data. In another embodiment, the response data may be stored in the mobile communications device 100 by synchronizing the mobile communications device 100 with the user's corresponding data items stored and/or associated with the user's host computer through the personal information manager (PIM).

A number of IVR response data entries may be stored along with associated response data identifiers, such as a number, name or key sequence, in order to identify and select the response data. The stored response data may be organized and rendered by the IVR module 227 and user interface module 228 and displayed on the display 110, for example, as a selectable menu of IVR response data and response data identifiers.

A transmission format identifier also may be entered by a user and associated with the stored response data. The transmission format identifier may be retrieved with the stored response data and indicate to the mobile communications device 100 the format used for transmitting the response data to the IVR system.

In one embodiment, since the response data may include sensitive financial or personal information, security measures may be applied to the stored IVR response data. For example, a password input may be requested before allowing the functions of storing, reviewing, editing or sending the response data on the mobile communications device. The response data may be stored in a content-protected area of the mobile communications device 100 and an additional security measure, such as the verification of a smart card in the smart card reader 290, may be required in order to access the IVR response data.

At action 305, a voice call is established between the mobile communications device 100 and a second device associated with the called telephone number or VOIP address. If the voice call to the second device is answered by or terminated at an IVR system, an IVR session is established at 315. Alternatively, the voice call and IVR session may be established by the IVR system initiating a call to the mobile communications device 100.

If the response data is stored in a content-protected area of memory, access to the response data may be restricted. Access to the IVR response data may be enabled after it is determined by the voice communications module 226 that a voice call has been established, as shown at 310. Alternatively, access to the response data may be enabled only after the IVR session is established at 315 as determined by the IVR module 227. In one embodiment, a user input to the mobile communications device 100 may be provided to indicate an IVR session has been established and to enable access to the IVR response data. Optionally, a password or smart card and PIN input may be requested by the mobile communications device 100 during the IVR session in order to permit use of the IVR response data. For example, the mobile communications device 100 may prompt a user for a password or smart card and PIN information after the voice call is established at 305, after the IVR session is established at 315, or after a select response data command is received at 320.

The select response data command may be received at the mobile communications device 100 to retrieve and transmit response data for responding to a question or request for information from the IVR system. The select response data command may be received by the mobile communications device 100 as a keyboard selection, a menu selection on a touchscreen display 110 or the select response data command may be associated with one of the control keys 120-128 on the mobile communications device 100. Speech recognition technology on the mobile communications device may be used to receive and interpret a spoken select response data command and a spoken name or identifier of the IVR response data. In one embodiment, a control key 120-128 input may be received and associated with a command to display a menu or list of IVR response data on the display 110. A subsequent input may be received to select the IVR response data.

The select response data command may comprise a sequence of commands to cause the mobile communications device to display a user interface associated with the IVR module 227, display one or more menus containing stored response data and response data identifiers, and receive a first input selecting the stored response data. The select response data command also may comprise displaying a menu or prompt and receiving a second input selecting the transmission format for the response data.

At 325 the selected response data is retrieved from memory. In one embodiment, the response data may be output by the IVR module 227 and user interface module 228 to the display 110 of the device 100 allowing a user to review the response data. A further input may be received by the mobile communications device 100 to confirm and approve the transmission of the response data to the IVR system.

At 330, the response data is transmitted through the communications subsystem 272, 274 to the IVR system. The format for transmitting the response data may be indicated by the IVR system and mobile communications device, a stored transmission format identifier, or the select response data command. If the response data is transmitted in a DTMF format, the action of transmitting the response data may comprise the DTMF tone generator 226 generating tones corresponding to the characters in the response data. If the response data is transmitted in an analog format, such as recorded speech, the action of transmitting may comprise playing the recorded speech. Once the response data has been transmitted, the mobile communications device 100 awaits a subsequent select response data command at 320.

If a select response data command has not been received, the IVR module 227 determines if an IVR session has been terminated at 340. If the IVR session has not been terminated, the mobile communications device 100 remains in a state waiting for a select response data command.

If the IVR session has been terminated, for example, if the voice call has been routed to another destination which is associated with a live person, the mobile communications device 100 then determines if the voice call has been terminated at 350. The IVR module 227 may detect the termination of the IVR session or a user input to the mobile communications device 100 may signal the end of the IVR session. In one embodiment, IVR module 227 may deem an IVR session to be terminated after a predetermined time period has elapsed. For example, where IVR response data has been provided and time has elapsed, during which for example, the IVR system places the voice call on hold or in a queue to be routed to a subsequent destination, the IVR module 227 may determine the IVR session has ended.

Where content protection or other security measures are applied to the IVR response data, access to the response data may be restricted at 345 after the IVR session has ended. It will be appreciated that one or more IVR sessions may be established and terminated during the course of a voice call as a call is re-routed to different attendants or people. If another IVR session is established during the voice call, access to the IVR response data may be subsequently enabled. Alternatively, access to the IVR response data may be enabled for the duration of the voice call and restricted after the voice call has ended at 350.

At action 350, the voice communications module determines whether the voice call has terminated. If not, a subsequent IVR session may be established at 315. If the voice call has terminated, the method of providing response data ends at 355. Access to the response data may be restricted after the end of the voice call (not shown) rather than after the end of each IVR session.

As described above, the IVR response data comprises characters including letters, numbers, typographic symbols, pauses and wait periods. A pause period may enable the response data to comprise a reply to more than one IVR request. For example, where an IVR system is known to request an account number followed by a request for a password or PIN, response data may be stored which includes the account numbers, one or more pause periods corresponding to the time an IVR system is expected to take to initiate the subsequent request, and the PIN numbers. Action 330 of transmitting response data thus comprises the IVR module 227 and communication systems 272, 274 sending the characters comprising a reply to a first IVR request, sending no data or silence for the duration of the pause period, and sending the characters comprising a reply to the subsequent IVR request. A pause period in the response data may be followed by a command defined in the IVR system, such as a "#" symbol signalling the end of a reply. In the above example, the response data may comprise an account number, a # or end of data command symbol, one or more pause periods corresponding to the time an IVR system is expected to take to initiate the subsequent request, and the PIN numbers.

The stored IVR response data may include a wait period to interrupt the retrieval and transmission of the response data. For example, rather than storing a sensitive password in the mobile communications device 100, an account number and a wait period may be stored as a response data entry. The wait period signals the IVR module and mobile communications device 100 when retrieving response data at action 325 to take additional actions. In response to a wait period character, the IVR module 227 and user interface module 228 may render a prompt for user input on the display 110. A user may input additional response data, such as a password, by selecting keys on the keyboard 120 or providing a spoken input which is recognized by the mobile communications device 100. A terminate command is input to the mobile communications device 100, such as selection of a "#" sign or key, to signal the end of the additional response data. The wait data received in the device 100 may be added to the stored response data in the place of the wait period and transmitted to the IVR system at 330. Alternatively, the IVR module 227 may retrieve and transmit the response data characters before acting upon the wait period. The additional wait data thus may be input to the device 100 and sent to the IVR system as subsequent transmission. It will be appreciated that a number of pause periods, wait periods, commands or symbols, letters and numbers and combination thereof may be used in the stored response data to provide a response suitable to reply to one or more requests in the IVR system.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray^{™} Disc, and a solid state storage device (e.g., NAND flash or synchronous dynamic RAM (SDRAM)).

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method of providing response data in interactive voice response (IVR) system sessions by electronic devices, the method comprising:
storing response data in an electronic device (300);
establishing a voice call (305) between the electronic device and an IVR system;
detecting an IVR session (315);
enabling access to the response data only after detecting the IVR session (310);
retrieving the response data (352) upon receipt of a select response data command (320) during an IVR session;
transmitting the response data to the IVR system (330);
detecting termination of the IVR session (340); and
restricting access to the response data (345) after termination of the IVR session.

2. The method of claim 1 wherein restricting access to the response data comprises applying content protection to the stored response data.

3. The method of claim 1 or claim 2 wherein termination of the IVR session occurs after a predetermined time period.

4. The method of any one of claims 1 to 3 wherein the response data comprises at least one character selected from the group consisting of: letters, numbers, typographic symbols, pause periods and wait periods.

5. The method of any one of claims 1 to 4 wherein the response data includes a wait period and wherein transmitting the wait period comprises:
displaying a prompt on a user interface;
receiving wait data;
detecting a terminate command; and
transmitting the response data and wait data to the IVR system.

6. The method of any one of claims 1 to 5 wherein storing response data (300) comprises recording a speech response and wherein transmitting response data (330) comprises playing the speech response.

7. The method of any one of claims 1 to 6 wherein the select response data command comprises displaying a list of one or more response data identifiers associated with the stored response data and receiving an input selecting a response data identifier.

8. The method of claim 7 wherein the select response data command further comprises displaying a list of one or more response data transmission formats and receiving a second input selecting a response data transmission format.

9. The method of any one of claims 1 to 8 wherein transmitting response data (330) comprises transmitting dual-tone multi-frequency (DTMF) data.

10. An electronic device (100) for providing response data in interactive voice response (IVR) system sessions, comprising:
a voice communications interface (225);
a controller (240) for controlling the operation of the electronic device (100);
a memory connected to the controller (240), for storing response data; and
an IVR module (227) executable by the controller (240) and configured to cause the controller to perform the method of any one of claims 1 to 9.

11. The electronic device (100) of claim 10 wherein the electronic device (100) is a mobile electronic device (100).

12. The electronic device (100) of claim 10 or claim 11 wherein the memory includes content protection.

13. A computer-readable storage medium in an electronic device (100) having a voice communications interface for connecting to interactive voice response (IVR) systems, the medium having stored thereon computer-readable and computer-executable instructions, which, when executed by a processor, cause the electronic device (100) to perform the method of any one of claims 1 to 9.

## Patentansprüche

1. Verfahren zum Vorsehen von Antwortdaten in interaktiven SprachAntwort(IVR - interactive voice response)-System-Sitzungen durch elektronische Vorrichtungen, wobei das Verfahren aufweist:
Speichern von Antwortdaten in einer elektronischen Vorrichtung (300);
Herstellen eines Sprachanrufs (305) zwischen der elektronischen Vorrichtung und einem IVR-System;
Erfassen einer IVR-Sitzung (315);
Ermöglichen eines Zugriff auf die Antwortdaten nur nach einem Erfassen der IVR-Sitzung (310);
Abrufen der Antwortdaten (352) bei Empfang eines ausgewählten Antwortdaten-Befehls (320) während einer IVR-Sitzung;
Übertragen der Antwortdaten an das IVR-System (330);
Erfassen einer Beendigung der IVR-Sitzung (340); und
Beschränken eines Zugriffs auf die Antwortdaten (345) nach einer Beendigung der IVR-Sitzung.

2. Verfahren gemäß Anspruch 1, wobei das Beschränken eines Zugriffs auf die Antwortdaten ein Anwenden eines Inhaltschutzes auf die gespeicherten Antwortdaten aufweist.

3. Verfahren gemäß Anspruch 1 oder Anspruch 2, wobei eine Beendigung der IVR-Sitzung nach einer vorgegebenen Zeitdauer stattfindet.

4. Verfahren gemäß einem der Ansprüche 1 bis 3, wobei die Antwortdaten zumindest ein Zeichen aufweisen, das aus der Gruppe ausgewählt ist, die besteht aus: Buchstaben, Zahlen, typografische Symbole, Pausezeiten und Wartezeiten.

5. Verfahren gemäß einem der Ansprüche 1 bis 4, wobei die Antwortdaten eine Wartezeit umfassen, und wobei ein Übertragen der Wartezeit aufweist:
Anzeigen einer Aufforderung auf einer Benutzerschnittstelle;
Empfangen von Warte-Daten;
Erfassen eines Beendigen-Befehls; und
Übertragen der Antwortdaten und der Warte-Daten an das IVR-System.

6. Verfahren gemäß einem der Ansprüche 1 bis 5, wobei das Speichern der Antwortdaten (300) ein Aufzeichnen einer Sprachantwort aufweist und wobei das Übertragen der Antwortdaten (330) eine Wiedergabe der Sprachantwort aufweist.

7. Verfahren gemäß einem der Ansprüche 1 bis 6, wobei der ausgewählte Antwortdaten-Befehl aufweist ein Anzeigen einer Liste von einem oder mehreren Antwortdaten-Identifizierern, der/die mit den gespeicherten Antwortdaten assoziiert ist/sind, und Empfangen einer Eingabe, die einen Antwortdaten-Identifizierer auswählt.

8. Verfahren gemäß Anspruch 7, wobei der ausgewählte Antwortdaten-Befehl weiter aufweist ein Anzeigen einer Liste von einem oder mehreren Antwortdaten-Übertragungsformat(en) und Empfangen einer zweiten Eingabe, die ein Antwortdaten-Übertragungsformat auswählt.

9. Verfahren gemäß einem der Ansprüche 1 bis 8, wobei das Übertragen der Antwortdaten (330) ein Übertragen von Dualtonmehrfrequenz(DTMF - Dual-Tone Multi-Frequency)-Daten aufweist.

10. Elektronische Vorrichtung (100) zum Vorsehen von Antwortdaten in interaktiven Sprach-Antwort(IVR - interactive voice response)-System-Sitzungen, die aufweist:
eine Sprachkommunikationsschnittstelle (225);
eine Steuerungsvorrichtung (240) zum Steuern des Betriebs der elektronischen Vorrichtung (100);
einen Speicher, der mit der Steuerungsvorrichtung (240) verbunden ist,
zum Speichern von Antwortdaten; und
ein IVR-Modul (227), das durch die Steuerungsvorrichtung (240) ausführbar ist und konfiguriert ist, die Steuerungsvorrichtung zu veranlassen, das Verfahren gemäß einem der Ansprüche 1 bis 9 durchzuführen.

11. Elektronische Vorrichtung (100) gemäß Anspruch 10, wobei die elektronische Vorrichtung (100) eine mobile elektronische Vorrichtung (100) ist.

12. Elektronische Vorrichtung (100) gemäß Anspruch 10 oder Anspruch 11, wobei der Speicher einen Inhaltschutz umfasst.

13. Computerlesbares Speichermedium in einer elektronischen Vorrichtung (100) mit einer Sprachkommunikationsschnittstelle zur Verbindung mit interaktiven Sprach-Antwort(IVR - interactive voice response)-Systemen, wobei das Medium darauf computerlesbare und computerausführbare Anweisungen gespeichert hat, die bei Ausführung durch einen Prozessor die elektronische Vorrichtung (100) veranlassen, das Verfahren gemäß einem der Ansprüche 1 bis 9 durchzuführen.

## Revendications

1. Procédé de délivrance de données de réponse dans des sessions de système de réponse vocale interactive (IVR) par des dispositifs électroniques, le procédé comprenant :
la mémorisation de données de réponse dans un dispositif électronique (300) ;
l'établissement d'un appel vocal (305) entre le dispositif électronique et le système de réponse vocale interactive ;
la détection d'une session de réponse vocale interactive (315) ;
l'autorisation d'un accès aux données de réponse uniquement après la détection de la session de réponse vocale interactive (310) ;
la récupération des données de réponse (352) lors de la réception d'un ordre de données de réponse de sélection (320) durant une session de réponse vocale interactive ;
la transmission des données de réponse au système de réponse vocale interactive (330) ;
la détection d'un achèvement de la session de réponse vocale interactive (340) ; et
la restriction de l'accès aux données de réponse (345) après l'achèvement de la session de réponse vocale interactive.

2. Procédé selon la revendication 1, dans lequel la restriction de l'accès aux données de réponse comprend l'application d'une protection de contenu aux données de réponse mémorisées.

3. Procédé selon la revendication 1 ou la revendication 2, dans lequel l'achèvement de la session de réponse vocale interactive se produit après une période de temps prédéterminée.

4. Procédé selon l'une quelconque des revendications 1 à 3, dans lequel les données de réponse comprennent au moins un caractère choisi dans le groupe comprenant : des lettres, des nombres, des symboles typographiques, des périodes de pause et des périodes d'attente.

5. Procédé selon l'une quelconque des revendications 1 à 4, dans lequel les données de réponse comprennent une période d'attente, et dans lequel la transmission de la période d'attente comprend :
l'affichage d'une invite de commande sur une interface d'utilisateur ;
la réception de données d'attente ;
la détection d'un ordre d'achèvement ; et
la transmission des données de réponse et des données d'attente au système de réponse vocale interactive.

6. Procédé selon l'une quelconque des revendications 1 à 5, dans lequel la mémorisation des données de réponse (300) comprend l'enregistrement d'une réponse vocale, et dans lequel la transmission de données de réponse (330) comprend la lecture de la réponse vocale.

7. Procédé selon l'une quelconque des revendications 1 à 6, dans lequel l'ordre de données de réponse de sélection comprend l'affichage d'une liste d'un ou de plusieurs identifiants de données de réponse associés aux données de réponse mémorisées et la réception d'une entrée sélectionnant un identifiant de données de réponse.

8. Procédé selon la revendication 7, dans lequel l'ordre de données de réponse de sélection comprend de plus l'affichage d'une liste d'un ou de plusieurs formats de transmission de données de réponse et la réception d'une deuxième entrée sélectionnant un format de transmission de données de réponse.

9. Procédé selon l'une quelconque des revendications 1 à 8, dans lequel la transmission de données de réponse (330) comprend la transmission de données multifréquences à deux tonalités (DTMF).

10. Dispositif électronique (100) pour délivrer des données de réponse dans des sessions de système de réponse vocale interactive (IVR), comprenant :
une interface de communications vocales (225) ;
un dispositif de commande (240) pour commander le fonctionnement du dispositif électronique (100) ;
une mémoire connectée au dispositif de commande (240), pour mémoriser des données de réponse ; et
un module de réponse vocale interactive (227) pouvant être exécuté par le dispositif de commande (240), et configuré de façon à faire exécuter par le dispositif de commande le procédé selon l'une quelconque des revendications 1 à 9.

11. Dispositif électronique (100) selon la revendication 10, dans lequel le dispositif électronique (100) est un dispositif électronique mobile (100).

12. Dispositif électronique (100) selon la revendication 10 ou la revendication 11, dans lequel la mémoire comprend une protection de contenu.

13. Support de mémorisation lisible par un ordinateur dans un dispositif électronique (100) comportant une interface de communications vocales pour la connexion à des systèmes de réponse vocale interactive (IVR), le support comportant, mémorisées sur celui-ci, des instructions lisibles par un ordinateur et exécutables par un ordinateur, qui, lorsqu'elles sont exécutées par un processeur, font exécuter par le dispositif électronique (100) le procédé selon l'une quelconque des revendications 1 à 9.
